# EUROPEAN PATENT APPLICATION

(11) **EP 4 086 753 A1**
(43) Date of publication of application: **09.11.2022**
(21) Application number: 20908709.7
(22) Date of filing: 18.11.2020
(51) Int. Cl.: G06F 8/20

(54) **DECISION SCHEDULING CUSTOMIZATION METHOD AND DEVICE BASED ON INFORMATION FLOW**

(30) Priority: 31.12.2019 CN 201911413699
(71) Applicant: Ai Speech Co., Ltd., Suzhou, Jiangsu 215123 (CN)
(72) Inventor: SHI, Weisi, Suzhou, Jiangsu 215123 (CN); SONG, Hongbo, Suzhou, Jiangsu 215123 (CN); ZHU, Chengya, Suzhou, Jiangsu 215123 (CN); FAN, Shuai, Suzhou, Jiangsu 215123 (CN)
(74) Representative: Hautier IP - MC/EP
(86) International application number: PCT/CN2020/129742
(87) International publication number: WO 2021/135699

(57) **Abstract**

Disclosed are an information flow-based decision-making and scheduling customization method and apparatus. The method includes: instantiating a pipeline and modules customized by a developer in the pipeline; mounting the modules on the pipeline in a module sequence customized by the developer; inputting a data stream into an entry of the pipeline; and acquiring a decision result for the data stream from an exit of the pipeline. The solution reduces the coupling between modules. The modules are independent from each other and can be developed collaboratively by many developers. In case the overall design remains unchanged, the modification of the modules has less impact on the global situation. The configurability of scheduling and decision-making is improved. Since the modules are dynamically mounted on the pipeline, this provides extremely high configurability for large-scale customization, and module instances can be dynamically generated by reading configuration information at runtime.

## Description

### TECHNICAL FIELD

The present invention belongs to the technical field of decision-making and scheduling, and in particular relates to an information flow-based decision-making and scheduling customization method and apparatus.

### BACKGROUND

In the related art, bus scheduling is a common scheduling scheme. The term "bus" comes from computer hardware system, which is a common channel and an important decision-making and scheduling module in modern computer architecture. In software design, bus scheduling is a shared scheduling system. According to the way of information scheduling, the bus can be classified into parallel bus and serial bus. With regard to the parallel bus, transmission from different modules mounted thereon can be carried out simultaneously, which is characterized by fast transmission speed and complex system structure. Compared with the parallel bus, the serial bus features in that only one pair of modules can participate in scheduling and data transmission at one time, with a simple structure and slow transmission. The bus must have a clear specification: the bus protocol, that is, the modules mounted on the bus must comply with certain rules when transmitting information. In the vast majority of cases a parallel bus is used.

In the process of realizing the present invention, the inventors found that the existing solution at least has the following defects:
1. Normally, the bus cannot guarantee the order of messages;
2. The scheduling logic is complex, and it is difficult to locate the problem;
3. It is difficult to sort out message flow during troubleshooting; and
4. Much resources are occupied.

### SUMMARY

Embodiments of the present invention provide an information flow-based decision-making and scheduling customization method and apparatus, so as to solve at least one of the above technical problems.

In a first aspect, an embodiment of the present invention provides an information flow-based decision-making and scheduling customization method, including: instantiating a pipeline and modules customized by a developer in the pipeline; mounting the modules on the pipeline in a module sequence customized by the developer; inputting a data stream into an entry of the pipeline; and acquiring a decision result on the data stream from an exit of the pipeline.

In a second aspect, an embodiment of the present invention provides an information flow-based decision-making and scheduling customization apparatus, including: an instantiating module configured to instantiate a pipeline and modules customized by a developer in the pipeline; a mounting module configured to mount the modules on the pipeline in a module sequence customized by the developer; an input module configured to input a data stream into an entry of the pipeline; and a decision-making module configured to acquire a decision result on the data stream from an exit of the pipeline. In a third aspect, an electronic device is provided, including: at least one processor, and a memory communicatively coupled to the at least one processor, wherein the memory stores instructions executable by the at least one processor, the instructions being executed by the at least one processor to enable the at least one processor to perform the steps of the information flow-based decision-making and scheduling customization method according to any embodiment of the present invention.

In a fourth aspect, an embodiment of the present invention further provides a computer program product, including a computer program stored in a non-volatile computer-readable storage medium, the computer program including program instructions, the program instructions being executed by a computer to cause the computer to perform the steps of the information flow-based decision-making and scheduling customization method according to any embodiment of the present invention.

The solutions provided by the method and apparatus of the present invention reduce coupling between modules. The modules are independent from each other and can be developed collaboratively by a plurality of developers. Under the condition that the overall design remains unchanged, the modification of the modules has less impact on the global situation. The configurability of scheduling and decision-making is improved. Since the modules are dynamically mounted on the pipeline, thus providing extremely high configurability for large-scale customization, while module instances can be dynamically generated by reading configuration information at runtime.

### BRIEF DESCRIPTION OF THE DRAWINGS

In order to illustrate the technical solutions of the embodiments of the present invention more clearly, a brief introduction of the accompanying drawings used in the description of the embodiments will be given as follows. Obviously, the drawings in the following description are some embodiments of the present disclosure. Those of ordinary skill in the art can also obtain other drawings based on these drawings without creative work.
FIG. 1 is a flowchart of an information flow-based decision-making and scheduling customization method according to an embodiment of the present invention.
FIG. 2 is a flowchart according to an embodiment of the present invention.
FIG. 3 is a schematic structural diagram according to an embodiment of the present invention.
FIG. 4 is a schematic diagram showing converting a flowchart into pipeline modules according to an embodiment of the present invention.
FIG. 5 is a schematic diagram showing mounting in converting a flowchart into pipeline modules according to an embodiment of the present invention.
FIG. 6 is a block diagram of an information flow-based decision-making and scheduling customization apparatus according to an embodiment of the present invention; and
FIG. 7 is a schematic structural diagram of an electronic device according to an embodiment of the present invention.

### DETAILED DESCRIPTION

To make the objects, technical solutions and advantages of the embodiments of the present invention clearer, the technical solutions in the embodiments of the present invention will be described clearly and completely below with reference to the accompanying drawings in the embodiments of the present invention. Obviously, the described are merely some but not all of the embodiments of the present invention. Based on the embodiments of the present invention, all other embodiments obtained by ordinary skilled in the art without inventive efforts shall fall within the scope of the present invention.

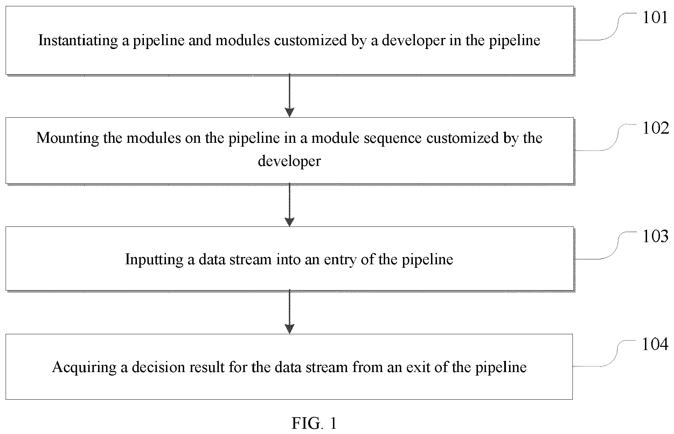

Referring to a flowchart of an information flow-based decision-making and scheduling customization method according to an embodiment of the present invention shown in FIG. 1, the information flow-based decision-making and scheduling customization method in this embodiment can be applied to scenarios that require decision-making and scheduling, such as high concurrency scenarios, which is not limited in the present invention.

As shown in FIG. 1, in step 101, a pipeline and modules customized by a developer in the pipeline are instantiated

In step 102, the modules are mounted on the pipeline according to a module sequence customized by the developer.

In step 103, a data stream is input into an entry of the pipeline.

In step 104, a decision result for the data stream is acquired from an exit of the pipeline. In this embodiment, for step 101, an information flow-based decision-making and scheduling customization apparatus first instantiates a pipeline and modules customized by a developer in the pipeline. In the process of instantiating the pipeline, some plug-ins may also be set up, such as flow control plug-ins. In the process of instantiating the modules, parameters of the modules may also be set up, description of which will not be repeated here. In step 102, the information flow-based decision-making and scheduling customization apparatus mounts the modules on the pipeline according to a module sequence customized by the developer. A module sequence customized by the developer may be a logical sequence of the modules and module mounting converted according to a flowchart provided by the developer. In step 103, a data stream is input into an entry of the pipeline and goes through the decision-making and scheduling of the modules. Finally, in step 104, a final decision result is acquired from an exit of the pipeline.

The solutions provided by the method of the present invention reduce coupling between modules. The modules are independent from each other and can be developed collaboratively by a plurality of developers. Under the condition that the overall design remains unchanged, the modification of the modules has less impact on the global situation. The configurability of scheduling and decision-making is improved. Since the modules are dynamically mounted on the pipeline, thus providing extremely high configurability for large-scale customization, while module instances can be dynamically generated by reading configuration information at runtime.

In some optional embodiments, any one or more of the following types of modules are mounted on the pipeline: a sub-pipeline module configured to meet sub-process requirements; an asynchronous controller module configured to meet parallel process requirements; and a logic module configured as the smallest unit of logic judgment. A sub-pipeline module is a sub-process when a pipeline is considered as a big process. Such a module design provides an expansion method for process branching. A asynchronous controller is designed for concurrent processes, and a plurality of modules can be scheduled concurrently in the asynchronous controller. A logic module is the smallest unit of logic judgment. Various existing logics can thus be processed by these modules, and subsequently, the logic of the flowchart can be directly converted into the mounting logic of the pipeline modules.

In other optional embodiments, mounting the modules on the pipeline in the module sequence customized by the developer includes: obtaining a developer's flowchart, and creating modules corresponding to the flowchart and a corresponding mounting logic based on a logical sequence of the flowchart; and mounting the modules on the pipeline according to the mounting logic. Accordingly, the flowchart provided by the developer can be converted into the corresponding module mounting logic, and then the corresponding modules are in order mounted on the pipeline according to the mounting logic.

In an optional embodiment, before inputting the data stream into the entry of the pipeline, the method further includes: setting up flow control and a cache queue at the entry of the pipeline. In this way, flow control can be performed on the pipeline and a cache queue can be set up to better handle high-concurrency situations. Some other common plug-ins in the field may also be set up, which is not limited in the present invention and will not be repeated here.

Optionally, a module that is mounted first has a higher priority on the pipeline. Thus, the priority is determined according to the mounting sequence of the modules.

Some problems encountered by the inventors in the process of forming the present invention and a specific embodiment of the final solution are described below, so as to facilitate understanding of the solution of the present invention by those skilled in the art. The inventors found in the process of forming the present invention that the defects in the prior art are mainly caused by the following reasons:
1. The design of the bus makes various modules mounted on the bus equal to the bus. In the case of concurrency, a plurality of modules may pass data to each other at the same time, resulting in that information received by the same module is not ordered.
2. When high concurrency causes time disorder, the same module may receive data in the wrong order, resulting in logical errors, and it is difficult to analyze and locate the problem from the log.
3. The bus is a many-to-many message publishing and subscription model. It is difficult to sort out the information flow only by looking at the log of one module.
4. Each time a message is delivered, data will flow from one node to another, and data will be copied twice, or json encoding and parsing will be done twice, which is resource-intensive.

When solving the above problems, those skilled in the art usually adopt following solutions:
1. Limit to uniqueness of information scheduling on the bus so as to ensure an ordered state, for example, through mechanisms such as locking.
2. A message queue mechanism is added to a data entry of each module to ensure ordered processing within the module.
3. A unique identifier and timestamp are added to each message.

The above are optimizations made on the premise that the bus architecture remains unchanged, but in fact, it still faces problems such as large consumption of resources and difficult maintenance.

The solution of the present invention proposes an information flow decision-making and scheduling method.

According to this method, data can only be transmitted module by module in one direction, and the mounting rules of the modules are redesigned. The scheduling logic is simple and clear and can be expanded into a flowchart similar to a decision tree, which is easy to maintain.

Different from the idea of the bus, the data stream in this method has a definite direction, that is, data can only be transmitted in one direction, and a reverse data stream is not allowed. This data stream is called a pipeline. In the case of high concurrency, information is input at the head of the pipeline, and output from the tail of the pipeline through plug-ins such as a cache or flow control, thus acquiring a scheduling or decision result. The pipeline mechanism not only ensures the ordering of the data in the scheduling layer, but also ensures the ordering of the data in each module. A major premise is thus established in an order of time for the scheduling logic, rendering a simple and clear structure. The data structure is unified, and frequent j son encoding and parsing is no longer necessary, which greatly saves resources.

A plurality of modules can be mounted in order on the pipeline. The modules are independent from each other, but the relative priorities of the modules in the pipeline instance are determined while they are mounted. A module that is mounted earlier has a higher logic priority in the pipeline instance, thus the scheduling logic is simple and clear. There are three types of modules, which are highly scalable: sub-pipeline module, asynchronous controller module, and logic module.

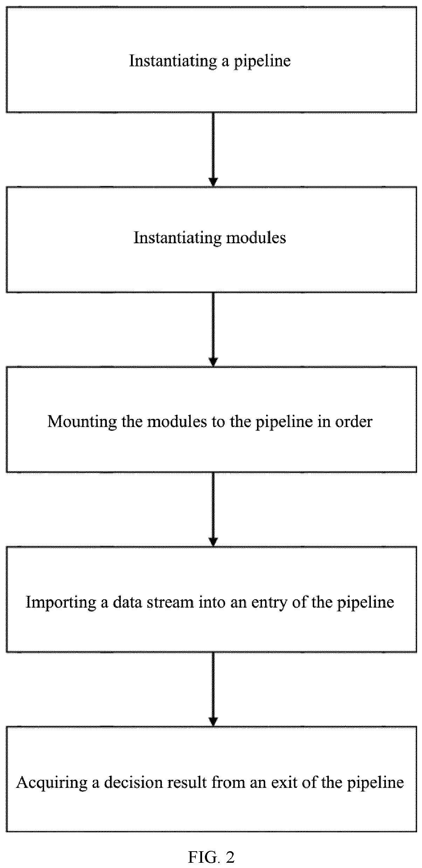

Reference is now made to the flowchart of a specific embodiment of the present invention shown in FIG. 2.

The process includes:
1. Instantiating a pipeline, and setting up plug-ins such as flow control, cache queue, etc.
2. Instantiating modules and setting up parameters of the modules
3. Mounting the modules on the pipeline in order
4. Inputting a data stream into an entry of the pipeline
5. Acquiring a decision result from an exit of the pipeline

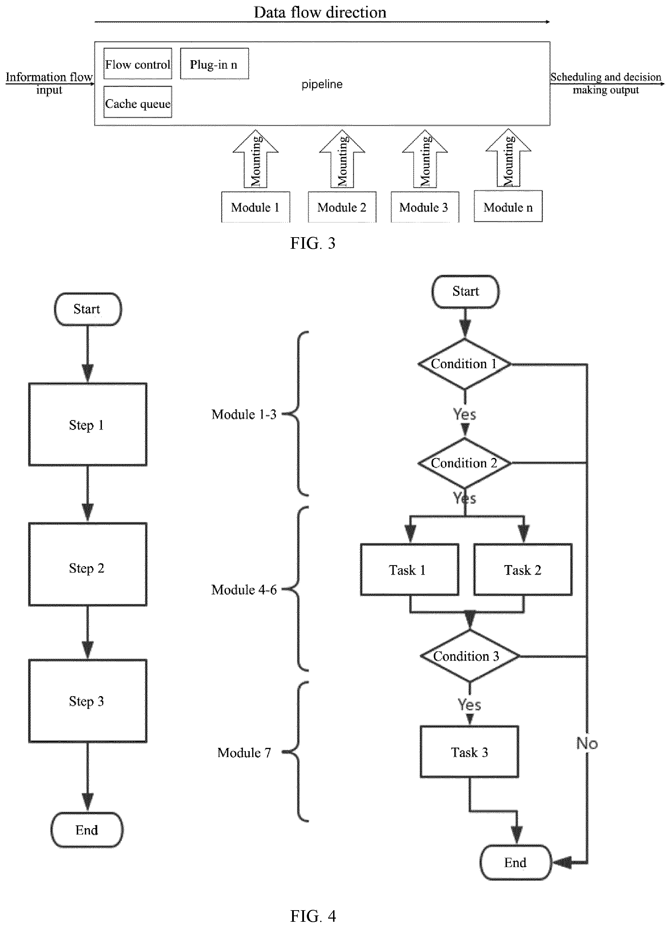

With further reference to FIG. 3, a schematic structure diagram of the pipeline is shown. For different usage scenarios, three types of modules are designed in this method, which can respectively meet the requirements of sub-processes, serial processes, parallel processes and so on. Modules can be combined with each other and have very strong scalability.

For sub-pipeline module: a sub-pipeline module is a sub-process when a pipeline is considered as a big process. Such a module design provides an expansion method for process branching.

For asynchronous controller: a asynchronous controller is designed for concurrent processes, and a plurality of modules can be scheduled concurrently in the asynchronous controller.

For logic module: a logic module is the smallest unit of logic judgment.

A flowchart of a new apparatus is taken as an example hereinafter to illustrate how a sorted and clear flow is converted into modules on a pipeline and a mounting logic of the modules in this method.

FIG. 4 shows a correspondence between logical conditions and the method - a flowchart. As shown in the flowchart on the left side of FIG. 4, it is assumed that through preliminary analysis, the scheduling logic of the apparatus goes through three steps (steps 1-3). There is an "and" relationship between the steps, that is, when the conditions in a previous step are not met, a "negative" decision result will be acquired regardless of whether the conditions in a subsequent step are met or not. A "positive" decision result is acquired only when the conditions in all steps are met.

The flowchart on the right side of FIG. 3 is obtained after further analysis. Step 1 is subdivided into two conditions, i.e., conditions 1-2, which need to be met at the same time. Step 2 is subdivided into two tasks (tasks 1-2) that are completed in parallel and then conditional judgment is made on the task result (condition 3). Step 3 is a simple logical task (task 3).

After the flowchart of FIG. 4 is obtained, a description will be provided on how to design each step in this method as different modules to be mounted on the pipeline and fully realize the logic in the flowchart.

Conditions 1-2 are designed as modules 2-3. Since conditions 1-2 belong to step 1, a sub-pipeline module 1 is added. Modules 2-3 are mounted on the sub-pipeline module 1; and the sub-pipeline module 1 is mounted on the pipeline. For step 2, two concurrent modules (modules 5-6) and an asynchronous controller module 4 are designed, corresponding to tasks 1-2 and condition 3 respectively. Step 3 is a typical logic module, where module 7 is mounted on the pipeline, corresponding to task 3.

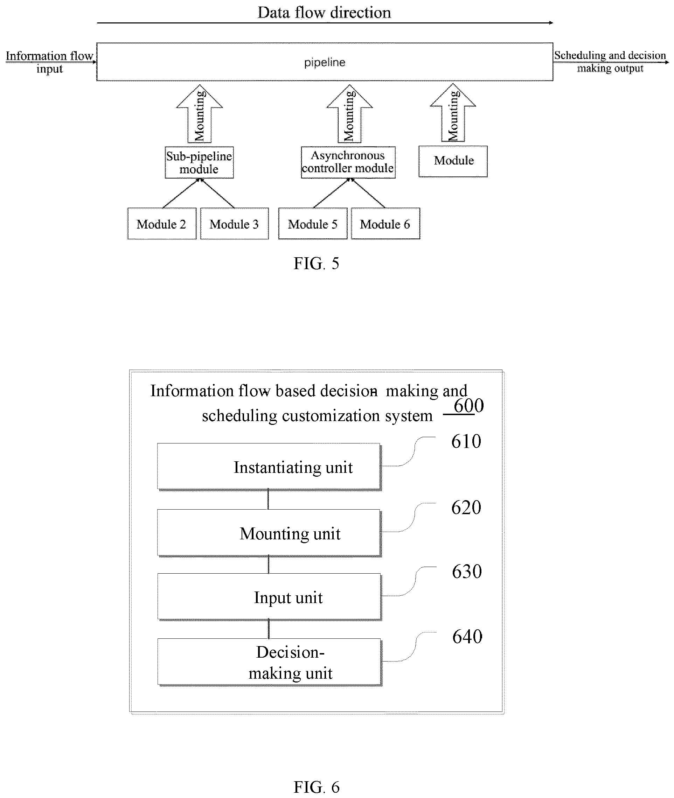

FIG. 5 shows the correspondence between logical conditions and the method - a schematic structure diagram.

As shown in FIG. 5, the creation of a pipeline and the mounting of modules can be completed for any flowchart with this method. When a new piece of information is input, it will pass through modules 1-7 sequentially, and each module will output a "yes/no" logical result. The pipeline decides whether to pass the information to a subsequent module or output a scheduling strategy directly.

In the process of realizing the present invention, the inventors have also tried the following solutions:
In order to avoid coupling between the information sender and a plurality of subscribers, all the information subscribers are connected into a chain by way of a previous module remembering the reference of a next module. When information transmission occurs, the data can be transmitted along this chain until a module handles it. This method has the following advantages:
1. The coupling between modules is reduced. This mode makes it unnecessary for a module to know which one handles its request and the structure of the chain, nor do senders and subscribers have to have explicit information about each other.
2. The scalability of the system is enhanced. New processing modules can be added as needed.
3. The connection between modules is simplified. Each module only needs to maintain a reference to its successor, not all other handlers. This avoids using numerous *if* or *if*•••*else* statements.
4. Responsibility sharing is realized. Each module only needs to handle the work it is responsible for, and pass works that should not be handled by itself to a next object for completion. The responsibilities of the modules are clarified.

However, the inventors also found the following main disadvantages:
1. It cannot be guaranteed that every request will be processed. Since a request has no explicit recipient, its process cannot be ensured, and the request may go all the way to the end of the chain without being processed.
2. For a relatively long chain, the processing of the request may involve a plurality of processing objects, and the system performance will be affected to a certain extent.
3. The rationality of chain establishment is guaranteed by the user, which increases complexity for the user. System errors may occur due to incorrect settings of modules on the chain, such as cyclic calls.

The solution of the embodiment of the present invention can achieve the following beneficial effects:
Direct effects:
   The coupling between modules is reduced. The modules are independent from each other and can be developed collaboratively by a plurality of developers. Under the condition that the overall design remains unchanged, modification of modules has less impact on the global situation.
   The configurability of scheduling and decision-making is improved. Since the modules are dynamically mounted on the pipeline, this provides extremely high configurability for large-scale customer customization, and module instances can be dynamically generated by reading configuration information at runtime.
Indirect effects:
   System scalability is enhanced. For any process, as long as a flowchart can be obtained therefrom, different modules and mounting logic can be abstracted by this method.
   Project maintainability is improved. When a scheduling strategy or decision-making strategy changes, it is only necessary to replace a certain module in most situations, which greatly improves the maintainability.

Referring is now made to FIG. 6, in which a block diagram of an information flow-based decision-making and scheduling customization apparatus according to an embodiment of the present invention is shown.

As shown in FIG. 6, the information flow-based decision-making and scheduling customization apparatus 600 includes an instantiating unit 610, a mounting unit 620, an input unit 630, and a decision-making unit 640.

The instantiating unit 610 is configured to instantiate a pipeline and modules customized by a developer in the pipeline. The mounting unit 620 is configured to mount the modules on the pipeline in a module sequence customized by the developer. The input unit 630 is configured to input a data stream into an entry of the pipeline. The decision-making unit 640 is configured to acquire a decision result for the data stream from an exit of the pipeline.

In some optional embodiments, any one or more of the following types of modules are mounted on the pipeline: a sub-pipeline module configured to meet sub-process requirements; an asynchronous controller module configured to meet parallel process requirements; and a logic module configured as the smallest unit of logic judgment.

In an optional embodiment, the mounting unit 620 is further configured to acquire the developer's flowchart, create modules corresponding to the flowchart and a corresponding mounting logic based on a logical sequence of the flowchart, and mount the modules on the pipeline according to the mounting logic.

It should be understood that the units illustrated in FIG. 6 correspond to the steps in the method described with reference to FIG. 1. Therefore, the operations and features described above with respect to the method and the corresponding technical effects are also applicable to the units in FIG. 6 and will not be repeated here.

It should be noted that the units in the embodiments of the present invention do not limit the solutions of the present invention. For example, the mounting unit may be a unit that mounts the modules on the pipeline in the module sequence customized by the developer. In addition, relevant functional modules may also be implemented by a hardware processor. For example, the mounting unit may also be implemented by a processor, which will not be repeated here.

In other embodiments, a non-volatile computer storage medium is also provided, which stores computer-executable instructions capable of executing the information flow-based decision-making and scheduling customization method in any of the above method embodiments.

As an implementation, the non-volatile computer storage medium according to the present invention stores computer-executable instructions which are set to:
- instantiate a pipeline and modules customized by a developer in the pipeline;
- mount the modules to the pipeline in a module sequence customized by the developer;
- input a data stream into an entry of the pipeline; and
- acquire a decision result for the data stream from an exit of the pipeline.

The memory may include a storage program area and a storage data area. The storage program area may store an operating system and application programs required by at least one function. The storage data area may store data generated according to the use of a full-duplex voice dialogue systems and the like. In addition, the memory may include a high-speed random access memory, and may also include a non-volatile memory, such as at least one magnetic disk storage device, a flash memory device, or other non-volatile solid-state storage devices. In some embodiments, the memory may optionally include memories remotely disposed with respect to the processor, and these remote memories may be connected to a full-duplex voice dialogue through a network. Examples of the above network include but are not limited to the Internet, intranet, local area network, mobile communication network, and combinations thereof.

An embodiment of the present invention also provides a computer program product, including a computer program stored on a non-volatile computer-readable storage medium. When program instructions included in the computer program are executed by a computer, the computer executes any one of the above methods.

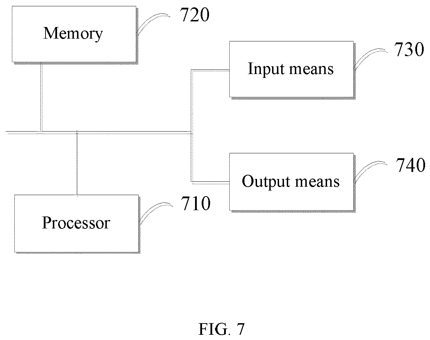

FIG. 7 is a schematic structural diagram of an electronic device according to an embodiment of the present invention. As shown in FIG. 7, the electronic device includes one or more processors 710 and a memory 720. In FIG. 7, one processor 710 is used as an example. The electronic device may further include an input means 730 and an output means 740. The processor 710, the memory 720, the input means 730, and the output means 740 may be connected by a bus or in other ways, and the connection by a bus is taken as an example in FIG. 7. The memory 720 is a non-volatile computer-readable storage medium. The processor 710 executes various functional applications and data processing of a server by running the non-volatile software programs, instructions and modules stored in the memory 720, that is, to implement the above method embodiments. The input means 730 may receive input numerical or character information and generate key signal input related to user settings and function control of a speech recognition device. The output means 740 may include a display device such as a display screen.

The above-mentioned products can perform the method according to the embodiments of the present application and have corresponding function modules and beneficial effects for performing the method. For technical details that are not described in detail in this embodiment, reference may be made to the method provided in the embodiments of the present application.

As an implementation, the above electronic device is applied to an information flow-based decision-making and scheduling customization apparatus, including:
at least one processor and a memory communicatively coupled thereto, wherein the memory stores instructions executable by the at least one processor to enable the at least one processor to:
- instantiating a pipeline and modules customized by a developer in the pipeline;
- mounting the modules on the pipeline in a module sequence customized by the developer;
- inputting a data stream into an entry of the pipeline; and
- acquiring a decision result for the data stream from an exit of the pipeline.

In some embodiments, any one or more of the following types of modules are mounted on the pipeline:
- a sub-pipeline module configured to meet sub-process requirements;
- an asynchronous controller module configured to meet parallel process requirements; and
- a logic module configured as the smallest unit of logic judgment.

In some embodiments, the step of mounting the modules on the pipeline in the module sequence customized by the developer comprises:
- acquiring the developer's flowchart, and creating modules corresponding to the flowchart and a corresponding mounting logic based on a logical sequence of the flowchart; and
- mounting the modules on the pipeline according to the mounting logic.

In some embodiments, before inputting the data stream into the entry of the pipeline, the method further comprises:
- setting up flow control and a cache queue at the entry of the pipeline.

In some embodiments, a module that is mounted earlier has a higher priority on the pipeline.

The electronic device in the embodiments of the present application exists in various forms, including but not limited to:
1. Mobile communication device which features in its mobile communication function and the main goal thereof is to provide voice and data communication, such as smart phones (such as iPhone), multimedia phones, functional phones, and low-end phones;
2. Ultra-mobile personal computer device which belongs to the category of personal computers and has computing and processing functions and generally mobile Internet access capability, such as PDA, MID and UMPC devices, e.g., iPad;
3. Portable entertainment devices which can display and play multimedia content, such as audio and video players (such as iPod), handheld game consoles, e-books, and smart toys and portable car navigation devices;
4. Server providing computing services and including a processor, hard disk, memory, system bus, etc., with a similar architecture to a general-purpose computer but a higher processing power and stability, reliability, security, scalability, manageability and for providing highly reliable services; and
5. Other electronic devices with data interaction function.

The device embodiments described above are only exemplary. The units described as separate components may or may not be physically separated, and the components displayed as units may or may not be physical units, that is, may be located in one place, or it can be distributed to multiple network elements. Some or all of the modules may be selected according to actual needs to achieve the object of the solution of this embodiment.

The above embodiments are merely intended to illustrate the technical solutions of the present invention, rather than limiting. Those skilled in the art may modify the technical solutions described in the foregoing embodiments or replace some of the technical features therein. These modifications or substitutions do not make the essence of the corresponding technical solutions depart from the spirit and scope of the technical solutions of the embodiments of the present invention.

## Claims

1. An information flow-based decision-making and scheduling customization method, applied to an electronic device, the method comprising:
• instantiating a pipeline and modules customized by a developer in the pipeline;
• mounting the modules on the pipeline in a module sequence customized by the developer;
• inputting a data stream into an entry of the pipeline; and
• acquiring a decision result for the data stream from an exit of the pipeline.

2. The method according to claim 1, wherein any one or more of the following types of modules are mounted on the pipeline:
• a sub-pipeline module configured to meet sub-process requirements;
• an asynchronous controller module configured to meet parallel process requirements; and
• a logic module configured as the smallest unit of logic judgment.

3. The method according to claim 2, wherein the step of mounting the modules on the pipeline in the module sequence customized by the developer comprises:
• acquiring the developer's flowchart, and creating modules corresponding to the flowchart and a corresponding mounting logic based on a logical sequence of the flowchart; and
• mounting the modules on the pipeline according to the mounting logic.

4. The method according to claim 1, wherein before inputting the data stream into the entry of the pipeline, the method further comprises:
• setting up flow control and a cache queue at the entry of the pipeline.

5. The method according to any one of claims 1-4, wherein a module that is mounted earlier has a higher priority on the pipeline.

6. An information flow-based decision-making and scheduling customization apparatus, comprising:
• an instantiating module configured to instantiate a pipeline and modules customized by a developer in the pipeline;
• a mounting module configured to mount the modules on the pipeline in a module sequence customized by the developer;
• an input module configured to input a data stream into an entry of the pipeline; and
• a decision-making module configured to acquire a decision result for the data stream from an exit of the pipeline.

7. The apparatus according to claim 1, wherein any one or more of the following types of modules are mounted on the pipeline:
• a sub-pipeline module configured to meet sub-process requirements;
• an asynchronous controller module configured to meet parallel process requirements; and
• a logic module configured as the smallest unit of logic judgment.

8. The apparatus according to claim 7, wherein the mounting module is further configured to:
• acquire the developer's flowchart, and creating modules corresponding to the flowchart and a corresponding mounting logic based on a logical sequence of the flowchart; and
• mount the modules on the pipeline according to the mounting logic.

9. An electronic device comprising: at least one processor, and a memory communicatively coupled to the at least one processor, wherein the memory stores instructions executable by the at least one processor, the instructions being executed by the at least one processor to enable the at least one processor to perform the steps of the method of any one of claims 1 to 5.

10. A storage medium storing a computer program which, when being executed by a processor, implements the steps of the method of any one of claims 1 to 5.
